# EUROPÄISCHE PATENTSCHRIFT

(11) **EP 2 421 727 B1**
(45) Veröffentlichungstag und Bekanntmachung des Hinweises auf die Patenterteilung: **21.08.2013**
(21) Anmeldenummer: 10713581.6
(22) Anmeldetag: 09.04.2010
(51) Int. Cl.: B60R 21/239

(54) **GASSACKMODUL MIT EINER ADAPTIVEN VENTILATIONSÖFFNUNG**
AIRBAG MODULE WITH AN ADAPTIVE VENT OPENING
MODULE DE SAC GONFLABLE AVEC UN TROU D'ÉVENT ADAPTIVE

(30) Priorität: 21.04.2009 DE 102009018159
(43) Veröffentlichungstag der Anmeldung: 29.02.2012
(73) Patentinhaber: Autoliv Development AB, 447 83 Vårgårda (SE)
(72) Erfinder: KÜHNE, Klaus-Peter, 85757 Karlsfeld (DE); SOMMER, Karl-Heinz, 82131 Stockdorf (DE); SCHOCK, Marc, 85757 Karlsfeld (DE); WEBER, Marcus, 97531 Untertheres (DE); ALBERT, Jörg, 82110 Germering (DE)
(74) Vertreter: Müller, Karl-Ernst
(86) Internationale Anmeldenummer: PCT/EP2010/002210
(87) Internationale Veröffentlichungsnummer: WO 2010/121717

(56) Entgegenhaltungen:
- EP-A2- 1 790 538
- US-A1- 2003 222 446

## Beschreibung

Die Erfindung betrifft ein Gassackmodul zum Einbau in ein Kraftfahrzeug mit einem aus einem Gassackgewebe gebildeten Gassack und mit einer Aufblasvorrichtung für den vor Auslösung eingefalteten Gassack, wobei der Gassack wenigstens eine adaptive Ventilationsöffnung aufweist, die in gefaltetem Zustand vor Aufblasen des Gassackes wenigstens teilweise in einem geschlossenen Zustand gehalten ist, und wobei ein mit seinem einen Ende lösbar an dem Gassackmodul oder einem fahrzeugfesten Teil gehaltertes und mit seinem anderen, die adaptive Ventilationsöffnung übergreifenden Ende fest mit dem Gassack verbundenes Fangband vorgesehen ist derart, dass bei aufgeblasenem Gassack vor der Freigabe des lösbar gehalterten Endes des Fangbandes das durch den Aufblasdruck gespannte Fangband eine Öffnung der adaptiven Ventilationsöffnung verhindert, wobei die adaptive Ventilationsöffnung durch einen in das Gassackgewebe eingeschnittenen Schlitz gebildet ist, an dessen beiden Enden eine das Einreißen des Schlitzes bei Druckbeanspruchung verhindernde Gestaltung angeordnet ist.

Ein Gassackmodul nach dem Oberbegriff von Anspruch 1 mit den vorgenannten Merkmalen ist aus der EP 1 790 538 A2 bekannt. Soweit es bei der an dem gattungsgemäßen Gegenstand ausgebildeten adaptiven Ventilationsöffnung darum geht, die Ventilationsöffnung vor dem oder auch während des Aufblasens des Gassackes verschlossen zu halten und die Freigabe der Ventilationsöffnung erst zu einem bestimmbaren Zeitpunkt zu ermöglichen, ist bei dem bekannten Gassackmodul eine Verschlussklappe für die Ventilationsöffnung vorgesehen, an welcher ein Fangband befestigt ist, welches mit seinem anderen Ende so an einer modulseitigen Haltevorrichtung festgelegt ist, dass bei Auslösung der Haltevorrichtung das betreffende Ende des Fangbandes freigegeben wird. Die Haltevorrichtung ist dabei als ein unter der Wirkung eines Antriebes längs verschiebbarer Bolzen ausgebildet, an dem das entsprechende Ende des Fangbandes eingehängt ist. Wird zur Freigabe des Fangbandes die Haltevorrichtung entsprechend angesteuert, so kommt aufgrund der Verschiebung des Bolzens das Ende des Fangbandes frei, und über den Druck des sich aufblasenden Gassackes wird die Verschlussklappe von der Ventilationsöffnung weggeklappt. Dabei ist die Ventilationsöffnung durch einen in das Gassackgewebe eingeschnittenen Schlitz gebildet, an dessen beiden Enden eine das Einreißen des Schlitzes bei Druckbeanspruchung verhindernde Gestaltung in Form von Stopplöchern angeordnet ist.

Eine ähnliche Konfiguration eines Gassackes ist ferner aus der US 2003/222446 A1 bekannt.

Mit dem bekannten Gassackmodul ist jeweils noch der Nachteil verbunden, dass die Anordnung einer die Ventilationsöffnung verschließenden Verschlussklappe materialaufwendig ist und die Verschlussklappe auf die jeweilige Größe der adaptiven Ventilationsöffnung abgestimmt sein muss; weiterhin ist die Montage des Gassackes einschließlich der daran anzubringenden Verschlussklappe mit Fangband aufwendig.

Der Erfindung liegt daher die Aufgabe zugrunde, bei einem Gassackmodul mit den gattungsgemäßen Merkmalen den Verschluss der adaptiven Ventilationsöffnung vor deren gesondert herbeizuführenden Freigabe in einfacher und wirkungsvoller Weise auszugestalten.

Die Lösung dieser Aufgabe ergibt sich einschließlich aus dem Anspruch 1, vorteilhafte Ausgestaltungen und Weiterbildungen der Erfindung sind in den Unteransprüchen angegeben.

Die Erfindung sieht in ihrem Grundgedanken vor, dass das Fangband an der Innenseite des Gassackes angeordnet ist und den Schlitz als adaptive Ventilationsöffnung übergreift und dass das Fangband durch eine der Befestigungsstelle seines einen Endes bezüglich des Schlitzes gegenüberliegend an dem Gassackgewebe angebrachte Sicherungsschlaufe geführt und anschließend zu der Halterung an dem fahrzeugfesten Teil weitergeführt ist.

Mit der Erfindung ist der Vorteil verbunden, dass im Zusammenhang mit der schlitzartigen Ausbildung der Ventilationsöffnung keine besonderen Anforderungen an das Fangband hinsichtlich dessen Abmessung oder Befestigung zu stellen sind. Es reicht aus, wenn das mit einem Ende am Gassack befestigte Fangband sich über die schlitzartige adaptive Ventilationsöffnung erstreckt und mit seinem anderen Ende lösbar an dem Gassackmodul oder einem fahrzeugfesten Teil angeschlagen ist, so dass das Fangband bei dem Entfalten des Gassackes das Entstehen einer auf den Schlitz einwirkenden Zugbelastung und damit ein vorzeitiges Öffnen der adaptiven Ventilationsöffnung verhindert. Wird das Fangband mittels einer entsprechend vorgesehenen Vorrichtung bewusst freigegeben, so führt die dadurch ermöglichte Streckung der durch das

Fangband zunächst aneinander gekoppelten, beidseits des Schlitzes befindlichen Gewebebereiche zu einer Öffnung des Schlitzes und damit zu einer Freigabe der adaptiven Ventilationsöffnung. Mit der zusätzlich noch vorgesehenen Anordnung der Sicherungsschlaufe ist der Vorteil verbunden, dass ein Verlauf des Fangbandes im rechten Winkel zum Verlauf des Schlitzes sichergestellt ist, so dass das Auftreten von Querkräften beziehungsweise Querkraftkomponenten bei einem sich ansonsten schräg zum Verlauf des Schlitzes einstellenden Verlauf des Fangbandes bei der Entfaltung des Gassackes verhindert ist. Damit wird bis zur Freigabe des Fangbandes eine Öffnung der schlitzartigen adaptiven Ventilationsöffnung sicher vermieden.

Nach einem Ausführungsbeispiel der Erfindung ist vorgesehen, dass die Sicherungsschlaufe aus einem quer zur Verlaufsrichtung des Fangbandes angeordneten und an seinen beiden äußeren Enden fest mit dem Gassackgewebe verbundenen Gewebestreifen besteht.

Es kann in an sich bekannter Weise vorgesehen sein, dass die das Ende des Fangbandes aufnehmende Halterung an einem im Inneren des Gassackes liegenden Teil des Gassackmoduls angeschlagen ist.

In einer ersten Ausgestaltung der Erfindung kann die das Einreißen des Schlitzes bei Druckbeanspruchung verhindernde Gestaltung aus einer quer zur Längserstreckung des Schlitzes verlaufenden Quernaht bestehen.

Es ist jedoch zweckmäßig und für die Ausbildung weiterer Ausführungsformen der Erfindung vorteilhaft, wenn die betreffende Gestaltung aus einem am Ende des Schlitzes angeordneten Stopploch besteht.

Soweit in einem üblichen Gassack, wie auch in der gattungsbildenden WO 03/006376 A2 beschrieben, neben einer adaptiven Ventilationsöffnung auch eine oder mehrere Standard-Ventilationsöffnungen ausgebildet sind, die ein Abströmen des Gases auch bei einem unterhalb des für die Öffnung der adaptiven Ventilationsöffnung voreingestellten Druckes liegenden Beaufschlagungsdruck ermöglich, ist in einer Ausführungsform der Erfindung vorgesehen, die erfindungsgemäß in Form des Schlitzes ausgebildete adaptive Ventilationsöffnung mit zumindest einer zusätzlich vorgesehenen Standard-Ventilationsöffnung zu kombinieren. Dies ist nach einem Ausführungsbeispiel der Erfindung dadurch vorgesehen, dass der Schlitz eine derartige Länge aufweist, dass sich ein durch das Fangband bis zur Freigabe des Fangbandes geschlossen gehaltener Schlitzabschnitt und wenigstens ein sich bei aufgeblasenem Gassack unter Druckeinwirkung öffnender und eine Standard-Ventilationsöffnung ausbildender Schlitzabschnitt einstellen. Beim Aufblasen des Gassackes öffnet sich zunächst der nicht durch das Fangband zusammengehaltene Schlitzbereich und bildet somit die Standard-Ventilationsöffnung aus, während der durch das Fangband zunächst zusammengehaltene Schlitzbereich erst nach Freigabe des Fangbandes sich öffnen kann und somit die adaptive Ventilationsöffnung ausbildet. Nach der vollständigen Freigabe des Schlitzes liegt eine Ventilationsöffnung mit einem entsprechend großen Querschnitt vor.

Im Rahmen einer solchen Ausbildung des Schlitzes kann nach unterschiedlichen Ausführungsbeispielen vorgesehen sein, dass das Fangband den Schlitz in einer mittigen Anordnung dazu übergreift und sich an beiden Enden des Schlitzes jeweils Standard-Ventilationsöffnungen ausbilden oder dass das Fangband den Schlitz in dessen einem Endbereich übergreift und sich einseitig in dem anderen Endbereich die Standard-Ventilationsöffnung ausbildet.

In einer alternativen Ausführungsform kann hinsichtlich der Ausbildung von Standard-Ventilationsöffnungen vorgesehen sein, dass die gewünschte Standard-Ventilationsöffnung beziehungsweise weitere Standard-Ventilationsöffnungen als von vorneherein in das Gassackgewebe eingeschnittene Öffnungen ausgebildet sind, wofür in vorteilhafter Weise zumindest eines der nach einem Ausführungsbeispiel der Erfindung vorgesehenen Stopplöcher des Schlitzes genutzt werden kann, indem dem betreffenden Stopploch eine so große Abmessung gegeben ist, dass dieses Stopploch selbst als Standard-Ventilationsöffnung dient. Somit erfüllt das in Form der Standard-Ventilationsöffnung ausgebildete Stopploch eine Doppelfunktion.

Hierzu kann in unterschiedlichen Ausführungsbeispielen der Erfindung vorgesehen sein, dass eines der beiden Stopplöcher als bei entfaltetem Gassack als ständig offene Standard-Ventilationsöffnung ausgebildet ist oder dass beide Stopplöcher als bei entfaltetem Gassack ständig offene Standard-Ventilationsöffnungen ausgebildet sind.

Gemäß einem weiteren Ausführungsbeispiel der Erfindung ist es auch vorgesehen, unterschiedliche Ausbildungen hinsichtlich einer zusätzlichen Standard-Ventilationsöffnung zu kombinieren, und hierzu kann vorgesehen sein, dass bei einer mittigen Anordnung des den Schlitz übergreifenden Fangbandes das an einem Ende des Schlitzes ausgebildete Stopploch als bei entfaltetem Gassack ständig offene Standard-Ventilationsöffnung ausgebildet ist und der das andere Ende des Schlitzes bildende Schlitzbereich sich bei Druckeinwirkung zu einer zweiten Standard-Ventilationsöffnung öffnet, wobei der bei Druckeinwirkung zwischen den Ventilationsöffnungen gelegene, von dem Fangband übergriffene Schlitzbereich bei Freigabe des Fangbandes freigegeben wird, so dass danach eine einzige Ventilationsöffnung mit entsprechender Abmessung gebildet ist.

Zur weiteren Absicherung gegen eine vorzeitige Öffnung des Schlitzes kann nach einem Ausführungsbeispiel der Erfindung vorgesehen sein, dass der Schlitz von einer die Gewebebereiche beidseits des Schlitzes erfassenden Reißnaht übergriffen ist. Hiermit ist auch eine Öffnung des Schlitzes in den Bereichen verhindert, in denen sich Standard-Ventilationsöffnungen ausbilden sollen, jedenfalls bis beim Aufblasen des Gassackes ein entsprechender Innendruck beziehungsweise ein entsprechender Belastungsdruck gegeben ist.

In der Zeichnung sind Ausführungsbeispiele der Erfindung wiedergegeben, welche nachstehend beschrieben sind. Es zeigen:
- Fig. 1: einen eine adaptive Ventilationsöffnung aufweisenden Gewebebereich eines Gassackes mit einem darin eingebrachten Schlitz in einer Draufsicht auf die Innenseite des Gassackgewebes bei geschlossener adaptiver Ventilationsöffnung,
- Fig. 2: den Gegenstand der Figur 1 bei freigegebener und geöffneter adaptiver Ventilationsöffnung,
- Fig. 3: den Gegenstand der Figur 1 mit einem zusätzlichen, eine Standard-Ventilationsöffnung ausbildenden Schlitzbereich in geschlossenem Zustand,
- Fig. 4: den Gegenstand der Figur 3 bei geöffneter Standard-Ventilationsöffnung, jedoch bei weiterhin geschlossener adaptiver Ventilationsöffnung,
- Fig. 5: den Gegenstand der Figur 4 bei zusätzlich geöffneter adaptiver Ventilationsöffnung,
- Fig. 6 - 8: den Gegenstand der Figuren 3 bis 5 mit beidseits der durch das Fangband überdeckten adaptiven Ventilationsöffnung angeordneten, jeweils eine Standard-Ventilationsöffnung ausbildenden Schlitzbereichen,
- Fig. 9: den Gegenstand der Figur 1 mit einer in das Gassackgewebe anstelle eines am Ende des Schlitzes befindlichen Stopploches eingeschnittenen Standard-Ventilationsöffnung bei zunächst geschlossener adaptiver Ventilationsöffnung,
- Fig. 10: den Gegenstand der Figur 9 bei zusätzlich geöffneter adaptiver Ventilationsöffnung,
- Fig. 11 - 12: den Gegenstand der Figuren 9 und 10 mit beidseits der durch das Fangband überdeckten adaptiven Ventilationsöffnung angeordneten, anstelle der am Ende des Schlitzes befindlichen Stopplöcher eingeschnittenen Standard-Ventilations-öffnungen,
- Fig. 13: eine weitere Ausführungsform mit einem eine adaptive Ventilationsöffnung ausbildenden Schlitzbereich, einem daran anschließenden, eine Standard-Ventilationsöffnung ausbildenden Schlitzbereich sowie einer anstelle eines am Ende des Schlitzes befindlichen Stopplochen eingeschnittenen Standard-Ventilationsöffnung in geschlossenem Zustand,
- Fig. 14: den Gegenstand der Figur 13 bei geöffneten Standard-Ventilationseinrichtungen, jedoch weiterhin geschlossener adaptiver Ventilationsöffnung,
- Fig. 15: den Gegenstand der Figur 14 bei vollständig geöffneter Ventilationsöffnung.

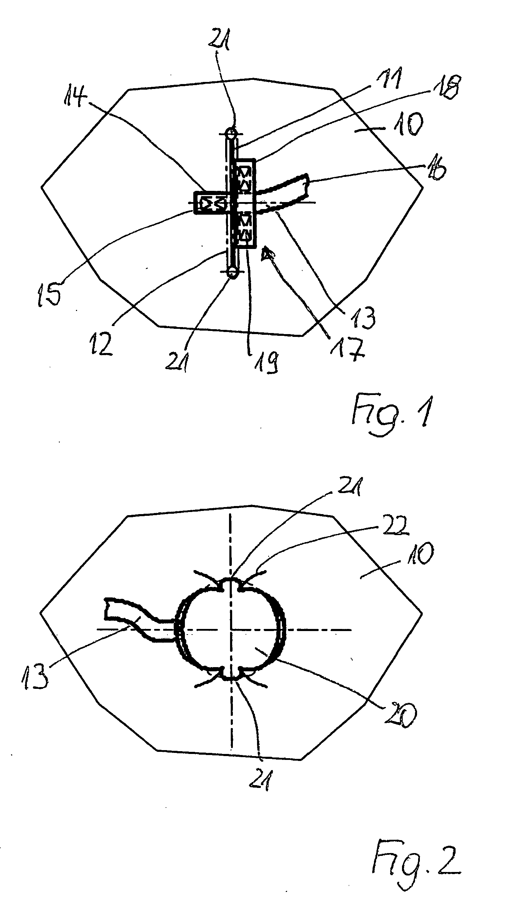

In den Figuren 1 und 2 ist zunächst ein Ausführungsbeispiel dargestellt, bei welchem nur eine adaptive Ventilationsöffnung verwirklicht ist. Hierzu ist in einen Gewebebereich 10 eines nicht weiter dargestellten, in einzelnen aber aus der gattungsbildenden WO 03/06276 A2 bekannten Gassackes ein Schlitz 11 eingeschnitten, der bei dem dargestellten Ausführungsbeispiel von einer seinen Umfang umschließenden Verstärkungsnaht 12 umgeben ist. Es ist einsichtig, dass bei einer entsprechenden Druckbeanspruchung sich der in das Gewebe eingeschnittene Schlitz aufweitet und somit eine entsprechende Öffnung ausbildet. Um ein Einreißen des in den Gewebebereich 10 eingeschnittenen Schlitzes 11 bei entsprechender Druckbeanspruchung zu verhindern, sind an beiden Enden des Schlitzes 11 jeweils Stopplöcher 21 angebracht.

Zur Einstellung einer durch den Schlitz 11 vorgegebenen adaptiven Ventilationsöffnung ist ein aus einem Gewebestreifen bestehendes Fangband 13 vorgesehen, welches mit seinem einen Ende 14 mittels einer in einem dem Schlitz 11 unmittelbar benachbarten Bereich angebrachten Vernähung 15 mit dem Gewebebereich 10 fest verbunden ist. Von dieser Vernähung 15 ist das Fangband 13 in einer den Schlitz 11 übergreifenden Lage weitergeführt und mit seinem freien Ende 16 in einer ebenfalls nicht weiter dargestellten, jedoch gleichfalls aus der gattungsbildenden WO 03/006276 A2 bekannten Weise an einer an dem ebenfalls nicht dargestellten, im Inneren des Gassackes angeordneten Gassackmodul oder einem anderen fahrzeugfesten Teil befindlichen Haltevorrichtung derart angeschlossen, dass das freie Ende 16 des Fangbandes 13 aufgrund entsprechender Signale freigegeben werden kann.

Die eine gerichtete Führung des Fangbandes 13 nach dessen Freigabe übernehmende Sicherungsschlaufe 17 ist bezüglich des Schlitzes 11 der Vernähung 15 gegenüberliegend an dem Gewebebereich 10 angebracht und besteht aus dem Gewebestreifen 18, der quer zur Verlaufsrichtung des Fangbandes 13 angeordnet und an seinen beiden äußeren Enden mittels fester Vernähungen 19 mit dem Gewebebereich 10 verbunden ist. Durch die Anbringung der Sicherheitsschlaufe 17 ist das Fangband 13 in seiner den Schlitz 11 übergreifenden Lage gesichert derart, dass der Verlauf des Fangbandes 13 etwa im rechten Winkel zum Verlauf des Schlitzes 11 auch bei einer entsprechenden Zugbeanspruchung des Fangbandes 13 sichergestellt ist. Damit wird das Auftreten von auf den Schlitz 11 einwirkenden Querkräften beziehungsweise Querkraftkomponenten vermieden.

Wird das freie Ende 16 des Fangbandes 13 durch die nicht weiter dargestellte Haltevorrichtung freigegeben, so zieht sich das Fangband 13 bei der durch den auf das Gassackgewebe einwirkenden Innendruck herbeigeführten Aufweitung des Schlitzes 11 durch die Sicherungsschlaufe 17 und hindert somit die Öffnung des Schlitzes 11 zu der in Figur 2 in geöffnetem Zustand dargestellten adaptiven Ventilationsöffnung 20 nicht. Soweit der Zusammenhalt der beiden durch den Schlitz 11 getrennten Gewebebereiche durch eine den Schlitz 11 übergreifende Reißnaht zur Vermeidung von Leckagen verbessert sein kann, reißt diese Reißnaht auf, so dass in Figur 2 deren Enden 22 ersichtlich sind.

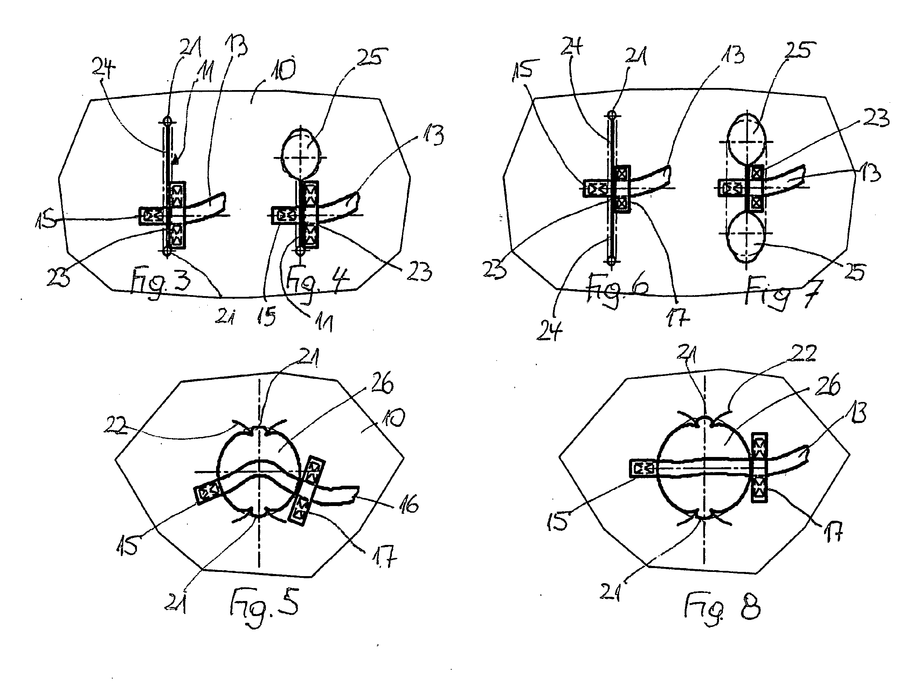

Bei dem in den Figuren 3 bis 5 dargestellten Ausführungsbeispiel ist nun die Anbringung der adaptiven Ventilationsöffnung kombiniert mit der Anbringung einer Standard-Ventilationsöffnung, wie derartige Standard-Ventilationöffnungen bei Gassäcken bekannter Ausbildung vorhanden sind. Diese Standard-Ventilationsöffnungen sollen ein Abströmen des Gases bei einem entsprechenden Beaufschlagungsdruck des aufgeblasenen Gassackes ermöglichen. Bei dem in den Figuren 3 bis 5 dargestellten Ausführungsbeispiel ist der Schlitz 11 in zwei Bereiche 23 und 24 unterteilt. Der Bereich 23 ist von dem Fangband 13 übergriffen und somit zusammengehalten, so dass sich in diesem Schlitzbereich 23 die adaptive Ventilationsöffnung ausbilden kann. Der andere Schlitzbereich 24 ist freigehalten, so dass nach Aufblasen des Gassackes bei entsprechender Druckeinwirkung sich dieser Schlitzbereich 24 zu einer Standard-Ventilationsöffnung 25 öffnet, wie dies in Figur 4 dargestellt ist. In diesem Zustand ist die adaptive Ventilationsöffnung zunächst noch nicht freigegeben. Dieser Freigabezustand ist dann in Figur 5 wiedergegeben, bei welchem das Fangband 13 durch Lösen der Haltevorrichtung freigegeben ist, so dass sich eine gemeinsame Ventilationsöffnung 26 mit einem entsprechenden Öffnungsquerschnitt ergibt.

Das in den Figuren 6 bis 8 dargestellte Ausführungsbeispiel unterscheidet sich von dem zuvor zu Figuren 3 bis 5 beschriebenen Ausführungsbeispiel nur dadurch, dass der Schlitz 11 mit einer solchen Länge ausgebildet ist, dass beidseits eines mittleren, von dem Fangband 13 übergriffenen Schlitzbereiches 23, der die adaptive Ventilationsöffnung ausbildet, zwei Schlitzbereiche 24 zur Ausbildung einer doppelten Standard-Ventilationsöffnung 25 vorgesehen sind, so dass nach vollständiger Freigabe beziehungsweise Öffnung des Schlitzes 11 sich wiederum eine gemeinsame Ventilations-öffnung ergibt, wie bereits zu Figur 5 angegeben.

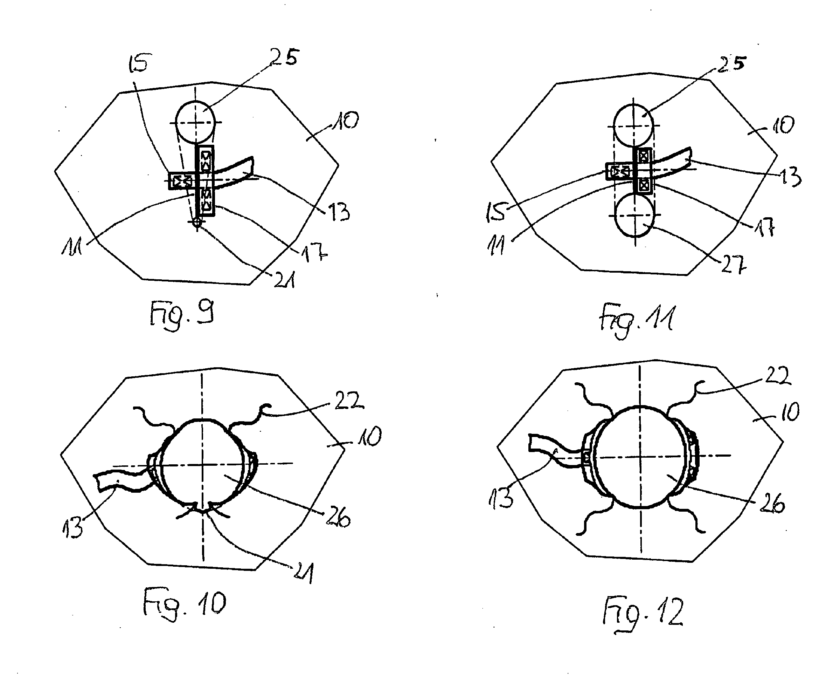

Bei dem in Figuren 9 und 10 dargestellten Ausführungsbeispiel ist das Anbringen einer Standard-Ventilationsöffnung gegenüber den zu den Figuren 3 bis 8 beschriebenen Ausführungsbeispielen nun insoweit geändert, als nicht ein Schlitzbereich für eine spätere Aufweitung als Standard-Ventilationsöffnung herangezogen ist, sondern von vorneherein eine Standard-Ventilationsöffnung 25 durch Einschneiden einer entsprechenden Öffnung in das Gassackgewebe ausgebildet ist. Soweit es ohnehin zweckmäßig ist, an den diesbezüglichen Enden des Schlitzes 11, wie zu Figur 1 beschrieben, Stopplöcher 21 anzubringen, ist nun die Standard-Ventilationsöffnung 25 anstelle eines Stopploches 21 angeordnet, so dass die Standard-Ventilationsöffnung 25 die Funktion des Stopploches ebenfalls übernimmt. Insofern kommt es bei dem Ausführungsbeispiel gemäß Figuren 9 und 10 zu einer Freigabe des Schlitzes 11 in der zu Figur 1 beschriebenen Weise mit Ausbildung einer adaptiven Ventilationsöffnung 20, so dass sich bei Freigabe des Fangbandes im Ergebnis eine gemeinsame Ventilationsöffnung 26 wiederum ergibt, wie zu Figuren 3 bis 8 beschrieben.

Das in Figuren 11 und 12 wiedergegebene Ausführungsbeispiel unterscheidet sich von dem zuvor zu Figuren 9 und 10 beschriebenen Ausführungsbeispiel wiederum nur dadurch, dass analog zum Ausführungsbeispiel gemäß Figuren 6 bis 8 zu beiden Seiten des Schlitzes 11 die Stopplöcher als Standard-Ventilationsöffnungen 25 ausgebildet sind.

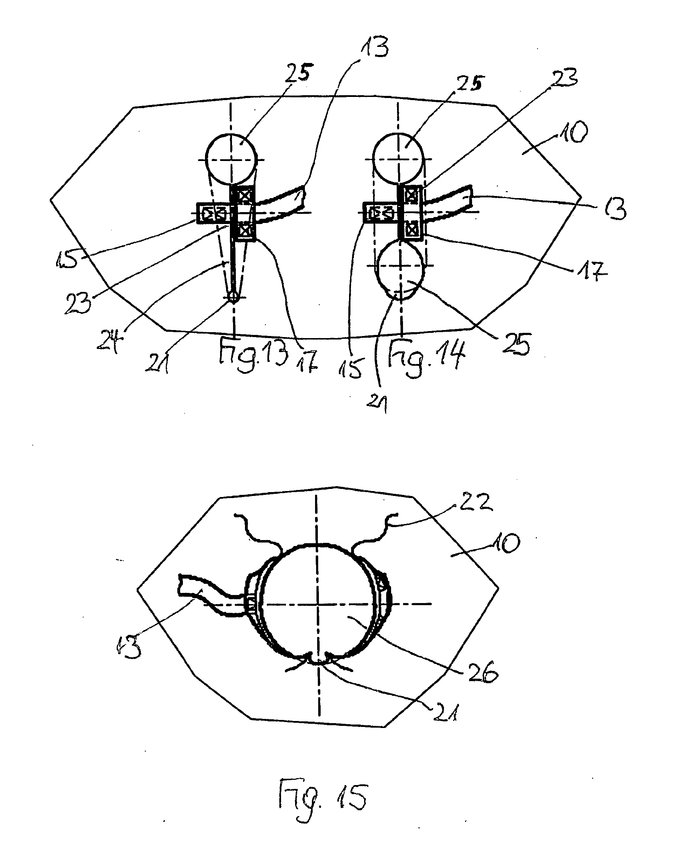

Das in den Figuren 13 bis 15 schließlich dargestellte Ausführungsbeispiel zeigt eine Kombination der vorstehend beschriebenen Ausführungsbeispiele hinsichtlich der Anbringung der Standard-Ventilationsöffnung, bei welchem einerseits ein Stopploch als Standard-Ventilationsöffnung 25 von vorneherein ausgebildet ist, während zusätzlich der Schlitz 11 einen Schlitzbereich 24 zur Ausbildung einer Standard-Ventilationsöffnung unter Druckeinwirkung aufweist. Auch hier stellt sich bei Freigabe des Fangbandes 13 am Ende eine gemeinsame Ventilationsöffnung 26 in der beschriebenen Form ein.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Gassackmodul zum Einbau in ein Kraftfahrzeug mit einem aus einem Gassackgewebe gebildeten Gassack und mit einer Aufblasvorrichtung für den vor Auslösung eingefalteten Gassack, wobei der Gassack wenigstens eine adaptive Ventilationsöffnung (20) aufweist, die in gefaltetem Zustand vor Aufblasen des Gassackes wenigstens teilweise in einem geschlossenen Zustand gehalten ist, und wobei ein mit seinem einen Ende lösbar an dem Gassackmodul oder einem fahrzeugfesten Teil gehaltertes und mit seinem anderen, die adaptive Ventilationsöffnung (20) übergreifenden Ende fest mit dem Gassack verbundenes Fangband (13) vorgesehen ist derart, dass bei aufgeblasenem Gassack vor der Freigabe des lösbar gehalterten Endes des Fangbandes (13) das durch den Aufblasdruck gespannte Fangband (13) eine Öffnung der adaptiven Ventilationsöffnung (20) verhindert, wobei die adaptive Ventilationsöffnung (20) durch einen in das Gassackgewebe (10) eingeschnittenen Schlitz (11) gebildet ist, an dessen beiden Enden eine das Einreißen des Schlitzes (11) bei Druckbeanspruchung verhindernde Gestaltung (21) angeordnet ist, **dadurch gekennzeichnet, dass** das Fangband (13) an der Innenseite des Gassackes angeordnet ist und den Schlitz (11) als adaptive Ventilationsöffnung (20) übergreift und dass das Fangband (13) durch eine der Befestigungsstelle (15) seines einen Endes (14) bezüglich des Schlitzes (11) gegenüberliegend an dem Gassackgewebe angebrachte Sicherungsschlaufe (17) geführt und anschließend zu der Halterung an dem fahrzeugfesten Teil weitergeführt ist.

2. Gassackmodul nach Anspruch 1, **dadurch gekennzeichnet, dass** die Sicherungsschlaufe (17) aus einem quer zur Verlaufsrichtung des Fangbandes (13) angeordneten und an seinen beiden äußeren Enden fest mit dem Gassackgewebe verbundenen Gewebestreifen (18) besteht.

3. Gassackmodul nach Anspruch 1 oder 2, **dadurch gekennzeichnet, dass** die das Ende (16) des Fangbandes (13) aufnehmende Halterung an einem im Inneren des Gassackes liegenden Teil des Gassackmoduls angeschlagen ist.

4. Gassackmodul nach einem der Ansprüche 1 bis 3, **dadurch gekennzeichnet, dass** die Gestaltung aus einer quer zur Längserstreckung des Schlitzes (11) verlaufenden Quernaht besteht.

5. Gassackmodul nach einem der Ansprüche 1 bis 3, **dadurch gekennzeichnet, dass** die Gestaltung aus einem am Ende des Schlitzes (11) angeordneten Stopploch (21) besteht.

6. Gassackmodul nach einem der Ansprüche 1 bis 5, **dadurch gekennzeichnet, dass** der Schlitz (11) eine derartige Länge aufweist, dass sich ein durch das Fangband (13) bis zur Freigabe des Fangbandes geschlossen gehaltener Schlitzabschnitt (23) und wenigstens ein sich bei aufgeblasenem Gassack unter Druckeinwirkung öffnender und eine Standard-Ventilationsöffnung (25) ausbildender Schlitzabschnitt (24) einstellen.

7. Gassackmodul nach Anspruch 6, **dadurch gekennzeichnet, dass** das Fangband (13) den Schlitz (11) in einer mittigen Anordnung dazu übergreift und sich an beiden Enden des Schlitzes (11) jeweils Standard-Ventlationsöffnungen (25) ausbilden.

8. Gassackmodul nach Anspruch 6, **dadurch gekennzeichnet, dass** das Fangband (13) den Schlitz (11) in dessen einem Endbereich übergreift und sich in dem anderen Endbereich die Standard-Ventilationsöffnung (25) ausbildet.

9. Gassackmodul nach einem der Ansprüche 5 bis 8, **dadurch gekennzeichnet, dass** eines der beiden Stopplöcher (21) als bei entfaltetem Gassack ständig offene Standard-Ventilationsöffnung (27) ausgebildet ist.

10. Gassackmodul nach einem der Ansprüche 5 bis 8, **dadurch gekennzeichnet, dass** beide Stopplöcher als bei entfaltetem Gassack ständig offene Standard-Ventilationsöffnungen ausgebildet sind.

11. Gassackmodul nach wenigstens einem der vorangehenden Ansprüche, **dadurch gekennzeichnet, dass** bei einer mittigen Anordnung des den Schlitz (11) übergreifenden Fangbandes (13) das an einem Ende des Schlitzes (11) ausgebildete Stopploch (21) als bei entfaltetem Gassack ständig offene Standard-Ventilationsöffnung (25) ausgebildet ist und der das andere Ende des Schlitzes bildende Schlitzbereich sich bei Druckeinwirkung zu einer zweiten Standard-Ventilationsöffnung (25, 27) öffnet, wobei der bei Druckeinwirkung zwischen den Ventilationsöffnungen gelegene, von dem Fangband (13) übergriffene Schlitzbereich (23) bei Freigabe des Fangbandes (13) freigegeben wird, so dass danach eine einzige Ventilationsöffnung (26) mit entsprechender Abmessung gebildet ist.

12. Gassackmodul nach einem der Ansprüche 1 bis 11, **dadurch gekennzeichnet, dass** der Schlitz (11) von einer die Gewebebereiche beidseits des Schlitzes (11) erfassenden Reißnaht übergriffen ist.

## Claims

1. Airbag module for installation in a motor vehicle with an airbag formed from an airbag woven fabric and with an inflation device for the airbag, which is folded in prior to activation, wherein the airbag has at least one adaptive ventilation opening (20), which in the folded state prior to inflation of the airbag is held at least partly in a closed state, and wherein an arrester strap (13), which is supported by its one end detachably on the airbag module or a permanent part of the vehicle and is connected fixedly to the airbag by its other end overlapping the adaptive ventilation opening (20), is provided such that when the airbag is inflated, prior to the release of the detachably supported end of the arrester strap (13), the arrester strap (13) stretched by the inflation pressure prevents an opening of the adaptive ventilation opening (20), wherein the adaptive ventilation opening (20) is formed by a slot (11) cut into the airbag woven fabric (10) , at both ends of which slot a construction (21) is arranged that prevents tearing of the slot (11) when pressure is applied, **characterised by** that the arrester strap (13) is arranged on the inside of the airbag and overlaps the slot (11) as adaptive ventilation opening (20) and that the arrester strap (13) is led through a securing loop (17) fastened on the airbag woven fabric opposite the attachment point (15) of its one end (14) with reference to the slot (11) and is then led further to the holder on the permanent vehicle part.

2. Airbag module according to claim 1, **characterised by** that the securing loop (17) consists of a woven fabric strip (18) arranged transversely to the run direction of the arrester strap (13) and connected fixedly to the airbag woven fabric at its two outer ends.

3. Airbag module according to claim 1 or 2, **characterised by** that the support taking up the end (16) of the arrester strap (13) is fastened on a part of the airbag module lying inside the airbag.

4. Airbag module according to one of claims 1 to 3, **characterised by** that the construction consists of a transverse seam running transversely to the longitudinal extension of the slot (11).

5. Airbag module according to one of claims 1 to 3, **characterised by** that the construction consists of a stop hole (21) arranged at the end of the slot (11).

6. Airbag module according to one of claims 1 to 5, **characterised by** that the slot (11) has such a length that a slot section (23) held closed by the arrester strap (13) until the release of the arrester strap and at least one slot section (24) that opens under the effect of pressure when the airbag is inflated and forms a standard ventilation opening (25 are adjusted.

7. Airbag module according to claim 6, **characterised by** that the arrester strap (13) overlaps the slot (11) in a central arrangement thereto and standard ventilation openings (25) are formed respectively at both ends of the slot (11).

8. Airbag module according to claim 6, **characterised by** that the arrester strap (13) overlaps the slot (11) in one of its end areas and in the other end area the standard ventilation opening (25) is formed.

9. Airbag module according to one of claims 5 to 8, **characterised by** that one of the two stop holes (21) is formed as a constantly open standard ventilation opening (27) when the airbag is unfolded.

10. Airbag module according to one of claims 5 to 8, **characterised by** that both stop holes (21) are formed as constantly open standard ventilation openings when the airbag is unfolded.

11. Airbag module according to at least one of the preceding claims, **characterised by** that in the case of a central arrangement of the arrester strap (13) overlapping the slot (11), the stop hole (21) formed at one end of the slot (11) is formed as a constantly open standard ventilation opening (25) when the airbag is unfolded and the slot area forming the other end of the slot opens upon the effect of pressure into a second standard ventilation opening (25, 27) wherein the slot area (23) located between the ventilation openings upon the effect of pressure and overlapped by the arrester strap (13) is released upon release of the arrester strap (13), with the result that a single ventilation opening (26) of suitable dimensions is formed thereafter.

12. Airbag module according to one of claims 1 to 11, **characterised by** that the slot (11) is overlapped by a tear seam covering the woven fabric areas on both sides of the slot (11)

## Revendications

1. Module de sac gonflable destiné à être monté dans un véhicule automobile comprenant un sac gonflable formé à partir d'un tissu de sac gonflable et comprenant un dispositif de gonflage pour le sac gonflable plié avant le déclenchement, le sac gonflable présentant au moins un trou d'évent (20) adaptatif qui, à l'état plié avant le gonflage du sac gonflable, est maintenu au moins partiellement à un état fermé, et une bande de retenue (13) fixée avec une de ses extrémités de manière détachable au module de sac gonflable ou à une pièce solidaire du véhicule et raccordée solidement au sac gonflable avec son autre extrémité chevauchant le trou d'évent (20) adaptatif étant prévue de telle manière que lorsque le sac gonflable est gonflé avant la libération de l'extrémité de la bande de retenue (13) fixée de manière détachable, la bande de retenue (13) tendue par la pression de gonflage empêche une ouverture du trou d'évent (20) adaptatif, le trou d'évent (20) adaptatif étant formé par une fente (11) coupée dans le tissu de sac gonflable (10), aux deux extrémités de laquelle est agencée une structure (21) empêchant la déchirure de la fente (11) lors d'un effort de compression, **caractérisé en ce que** la bande de retenue (13) est agencée sur la face intérieure du sac gonflable et chevauche la fente (11) en tant que trou d'évent (20) adaptatif et **en ce que** la bande de retenue (13) est guidée par une boucle d'attache (17) appliquée sur le tissu de sac gonflable opposée à l'emplacement de fixation (15) de l'une (14) de ses extrémités par rapport à la fente (11) et continue ensuite à être guidée vers la fixation sur la pièce solidaire du véhicule.

2. Module de sac gonflable selon la revendication 1, **caractérisé en ce que** la boucle d'attache (17) est composée d'une bande de tissu (18) agencée transversalement à la direction d'extension de la bande de retenue (13) et raccordée solidement au tissu de sac gonflable avec ses deux extrémités extérieures.

3. Module de sac gonflable selon la revendication 1 ou 2, **caractérisé en ce que** la fixation recevant l'extrémité (16) de la bande de retenue (13) est fixée sur une partie du module de sac gonflable située à l'intérieur du sac gonflable.

4. Module de sac gonflable selon l'une des revendications 1 à 3, **caractérisé en ce que** la structure est composée d'une couture transversale s'étendant transversalement à l'extension longitudinale de la fente (11).

5. Module de sac gonflable selon l'une des revendications 1 à 3, **caractérisé en ce que** la structure est composée d'un trou d'arrêt (21) agencé à l'extrémité de la fente (11).

6. Module de sac gonflable selon l'une des revendications 1 à 5, **caractérisé en ce que** la fente (11) présente une longueur telle qu'une partie de fente (23) maintenue fermée par la bande de retenue (13) jusqu'à la libération de la bande de retenue et au moins une partie de fente (24) s'ouvrant sous l'effet de la pression et formant un trou d'évent standard (25) lorsque le sac gonflable est gonflé se forment.

7. Module de sac gonflable selon la revendication 6, **caractérisé en ce que** la bande de retenue (13) chevauche la fente (11) dans un agencement centré par rapport à celle-ci et que des trous d'évent standard (25) se forment respectivement aux deux extrémités de la fente (11).

8. Module de sac gonflable selon la revendication 6, **caractérisé en ce que** la bande de retenue (13) chevauche la fente (11) dans l'une de ses zones d'extrémité et que le trou d'évent standard (25) se forme dans l'autre zone d'extrémité.

9. Module de sac gonflable selon l'une des revendications 5 à 8, **caractérisé en ce que** l'un des deux trous d'arrêt (21) est formé en tant que trou d'évent standard (27) toujours ouvert lorsque le sac gonflable est déployé.

10. Module de sac gonflable selon l'une des revendications 5 à 8, **caractérisé en ce que** les deux trous d'arrêt sont formés en tant que trous d'évent standard toujours ouverts lorsque le sac gonflable est déployé.

11. Module de sac gonflable selon au moins l'une des revendications précédentes, **caractérisé en ce qu**'en cas d'agencement centré de la bande de retenue (13) chevauchant la fente (11), le trou d'arrêt (21) formé à une extrémité de la fente (11) est formé en tant que trou d'évent standard (25) toujours ouvert lorsque le sac gonflable est déployé et la zone de fente formant l'autre extrémité de la fente s'ouvre en un second trou d'évent standard (25, 27) sous l'effet de la pression, la zone de fente (23) chevauchée par la bande de retenue (13) et située entre les trous d'évent sous l'effet de la pression étant libérée lors de la libération de la bande de retenue (13) de sorte qu'ensuite un seul trou d'évent (26) d'une taille correspondante est formé.

12. Module de sac gonflable selon l'une des revendications 1 à 11, **caractérisé en ce que** la fente (11) est chevauchée par une ligne de rupture prenant les zones de tissu des deux côtés de la fente (11).
